# FASCICULE DE BREVET EUROPEEN

(11) **EP 4 130 635 B1**
(45) Date de publication et mention de la délivrance du brevet: **20.03.2024**
(21) Numéro de dépôt: 22183710.7
(22) Date de dépôt: 08.07.2022
(51) Int. Cl.: F28F 3/00

(54) **ÉCHANGEUR THERMIQUE LIMITANT LES RISQUES DE CONTAMINATION ENTRE DEUX FLUIDES ET AÉRONEF COMPRENANT AU MOINS UN TEL ÉCHANGEUR THERMIQUE**
WÄRMETAUSCHER, DER DAS RISIKO EINER KONTAMINATION ZWISCHEN ZWEI FLUIDEN BEGRENZT, UND LUFTFAHRZEUG MIT MINDESTENS EINEM SOLCHEN WÄRMETAUSCHER
HEAT EXCHANGER LIMITING THE RISK OF CONTAMINATION BETWEEN TWO FLUIDS AND AIRCRAFT COMPRISING AT LEAST ONE SUCH HEAT EXCHANGER

(30) Priorité: 05.08.2021 FR 2108513
(43) Date de publication de la demande: 08.02.2023
(73) Titulaire: Airbus SAS, 31700 Blagnac Cedex (FR); AIRBUS OPERATIONS (S.A.S.), 31060 Toulouse (FR)
(72) Inventeur: CZAPLA, Lionel, 31060 TOULOUSE (FR); CARRETERO BENIGNOS, Jorge A., 82024 TAUFKIRCHEN (DE)
(74) Mandataire: Fantin, Laurent

(56) Documents cités:
- WO-A1-97/03281
- US-A1- 2007 169 916
- US-A1- 2013 206 359
- US-B2- 10 329 026

## Description

La présente demande se rapporte à un échangeur thermique limitant les risques de contamination entre deux fluides ainsi qu'à un aéronef comprenant au moins un tel échangeur thermique. Un tel échangeur comportant les caractéristiques constructives du préambule de la revendication 1 est connu du document WO97/03281A1.

Selon un mode de réalisation, un aéronef comprend plusieurs moteurs à hélice fonctionnant à l'hydrogène ainsi qu'au moins un dispositif d'alimentation en hydrogène configuré pour alimenter les moteurs.

Ce dispositif d'alimentation en hydrogène comprend un réservoir d'hydrogène positionné dans le fuselage, une pompe haute pression pour mettre en pression l'hydrogène, un échangeur thermique configuré pour réchauffer l'hydrogène qui passe de l'état liquide à l'état gazeux ainsi que différents conduits pour relier le réservoir d'hydrogène, la pompe, l'échangeur thermique et le moteur.

Les conduits sont des tuyaux à double peau pour empêcher toute fuite d'hydrogène.

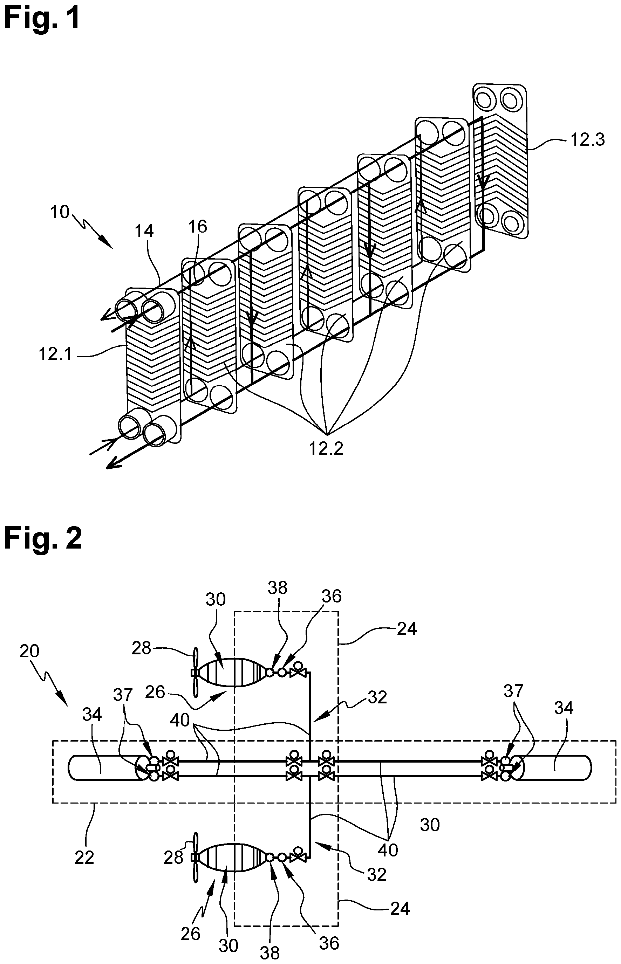

Selon un mode de réalisation visible sur la figure 1, un échangeur thermique 10 comprend un empilement de plaques 12.1 à 12.3 entre lesquelles circulent alternativement un premier fluide 14 circulant dans un premier circuit ainsi qu'un deuxième fluide 16 circulant dans un deuxième circuit. Un tel échangeur thermique 10 comprend deux plaques d'extrémité 12.1, 12.3 qui présentent chacune au moins une gorge sur une seule face ainsi que des plaques intermédiaires 12.2 qui présentent chacune au moins une gorge sur chacune de leurs faces, les gorges étant agencées sur les faces des différentes plaques 12.1 à 12.3 de manière à délimiter des canaux entre les plaques d'extrémité et intermédiaires 12.1 à 12.3 lorsque ces dernières sont empilées et plaquées les unes contre les autres.

Selon ce mode de réalisation, les premier et deuxième fluides 14, 16 sont séparés par une seule plaque intermédiaire 12.2.

En cas d'apparition d'une fissure sur l'une des plaques intermédiaires 12.2, les premier et deuxième fluides 14, 16 peuvent se mélanger.

Lorsque le premier fluide 14 est de l'hydrogène, il est nécessaire de dimensionner tout le deuxième circuit du deuxième fluide 16 comme s'il était destiné à de l'hydrogène et de prévoir par exemple des tuyaux à double peau.

Cette solution n'est pas satisfaisante car elle conduit à augmenter la masse, le volume et les coûts du deuxième circuit destiné au deuxième fluide ainsi qu'à le complexifier.

La présente invention vise à remédier à tout ou partie des inconvénients de l'art antérieur.

A cet effet, l'invention a pour objet un échangeur thermique à plaques assurant un transfert thermique entre des premier et deuxième fluides, comprenant un boîtier étanche ainsi qu'un corps positionné à l'intérieur du boîtier, ledit corps comportant un empilement d'au moins un premier assemblage de première et deuxième plaques plaquées l'une contre l'autre entre lesquelles circule le premier fluide et d'au moins un deuxième assemblage de troisième et quatrième plaques plaquées l'une contre l'autre entre lesquelles circule le deuxième fluide, les premier et deuxième assemblages étant agencés de manière à assurer un transfert thermique entre les premier et deuxième fluides.

Selon l'invention, le premier fluide est de l'hydrogène et le boîtier comprend au moins un capteur configuré pour détecter une présence d'hydrogène dans le boîtier.

En complément, les deux fluides sont séparés dans l'échangeur thermique par deux plaques, ce qui permet de réduire les risques de mélange des deux fluides. De plus, le fait de positionner le corps de l'échangeur thermique à l'intérieur d'un boîtier étanche permet de minimiser les risques de fuite. Par conséquent, comme le premier fluide est de l'hydrogène, le circuit du deuxième fluide n'a pas besoin d'être sécurisé comme celui de l'hydrogène.

Selon une autre caractéristique, chaque premier assemblage comprend au moins un premier chant périphérique, en périphérie des première et deuxième plaques, ainsi qu'au moins un premier canal configuré pour canaliser le premier fluide, positionné entre les première et deuxième plaques et présentant une première extrémité débouchant au niveau du premier chant périphérique et une deuxième extrémité débouchant au niveau du premier chant périphérique. En parallèle, chaque deuxième assemblage comprend au moins un deuxième chant périphérique, en périphérie des troisième et quatrième plaques, ainsi qu'au moins un deuxième canal configuré pour canaliser le deuxième fluide, positionné entre les troisième et quatrième plaques et présentant une première extrémité débouchant au niveau du deuxième chant périphérique et une deuxième extrémité débouchant au niveau du deuxième chant périphérique.

Selon une autre caractéristique, le corps comprend un empilement de plusieurs premiers assemblages et de plusieurs deuxièmes assemblages, les premiers et deuxièmes assemblages étant alternés, ledit empilement comportant des première et deuxième faces au niveau desquelles sont réparties les premières et deuxièmes extrémités des premier et deuxième canaux.

Selon une autre caractéristique, les premières extrémités des premiers canaux des premiers assemblages sont positionnées sur une première moitié de la première face et les deuxièmes extrémités des deuxièmes canaux des deuxièmes assemblages sont positionnées sur une deuxième moitié de la première face. En parallèle, les deuxièmes extrémités des premiers canaux des premiers assemblages sont positionnées sur une première moitié de la deuxième face et les premières extrémités des deuxièmes canaux des deuxièmes assemblages sont positionnées sur une deuxième moitié de la deuxième face.

Selon une autre caractéristique, le corps comprend :
- une première nourrice présentant un premier conduit et configurée pour faire communiquer ledit premier conduit avec les premières extrémités des premiers canaux des premiers assemblages,
- un premier collecteur présentant un deuxième conduit et configuré pour faire communiquer ledit deuxième conduit avec les deuxièmes extrémités des premiers canaux des premiers assemblages,
- une deuxième nourrice présentant un troisième conduit et configurée pour faire communiquer ledit troisième conduit avec les premières extrémités des deuxièmes canaux des deuxièmes assemblages,
- un deuxième collecteur présentant un quatrième conduit et configuré pour faire communiquer ledit quatrième conduit avec les deuxièmes extrémités des deuxièmes canaux des deuxièmes assemblages.

Selon une autre caractéristique, l'échangeur thermique comprend au moins un conduit à double peau comportant des conduits intérieur et extérieur ainsi qu'au moins un système de raccordement reliant le conduit intérieur du conduit à double peau et un conduit parmi le premier conduit de la première nourrice et le deuxième conduit du premier collecteur, le conduit extérieur du conduit à double peau étant positionné à l'extérieur du boîtier et présentant une collerette plaquée contre le boîtier et reliée à ce dernier de manière étanche autour d'un orifice du boîtier traversé par le conduit intérieur du conduit à double peau ou le conduit parmi le premier conduit de la première nourrice et le deuxième conduit du premier collecteur.

Selon une autre caractéristique, au moins un conduit parmi le troisième conduit de la deuxième nourrice et le quatrième conduit du deuxième collecteur présente une collerette positionnée à l'intérieur du boîtier, plaquée contre et reliée à ce dernier de manière étanche autour d'un orifice traversant le boîtier.

Selon une autre caractéristique, l'échangeur thermique comprend une matrice en un matériau étanche dans laquelle est noyé le corps.

Selon une autre caractéristique, les premier(s) et deuxième(s) assemblages sont plaqués directement les uns contre les autres.

Selon une autre caractéristique, au moins deux premier et deuxième assemblages sont espacés l'un de l'autre. En complément, le corps comprend au moins une couche en matériau thermiquement conducteur intercalée entre les premier et deuxième assemblages espacés assurant un transfert thermique entre eux.

Selon une autre caractéristique, le boîtier contient une atmosphère inertée.

Selon une autre caractéristique, le boîtier est mis sous vide.

Selon une autre caractéristique, le boîtier comprend au moins un capteur configuré pour détecter une présence d'oxygène dans le boîtier.

L'invention a également pour objet un aéronef comprenant au moins un échangeur thermique selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une vue en perspective en éclaté d'un échangeur thermique illustrant un mode de réalisation de l'art antérieur,
- La figure 2 est une représentation schématique d'un aéronef comportant des moteurs fonctionnant à l'hydrogène,
- La figure 3 est une vue en perspective d'un échangeur thermique illustrant un mode de réalisation de l'invention,
- La figure 4 est une vue en perspective et en éclaté de l'échangeur thermique visible sur la figure 3,
- La figure 5 est une représentation schématique d'un procédé d'assemblage de plaques d'un échangeur thermique illustrant un mode de réalisation de l'invention,
- La figure 6 est une représentation schématique d'un procédé de fabrication d'un corps d'un échangeur thermique illustrant un mode de réalisation de l'invention,
- La figure 7 est une coupe selon le plan VII de la figure 5 d'un premier assemblage de première et deuxième plaques d'un échangeur thermique illustrant un mode de réalisation de l'invention,
- La figure 8 est coupe selon la ligne VIII-VIII de la figure 7,
- La figure 9 est coupe selon la ligne IX-IX de la figure 7,
- La figure 10 est une coupe schématique d'un échangeur thermique illustrant un premier mode de réalisation de l'invention,
- La figure 11 est une coupe schématique d'un échangeur thermique illustrant un deuxième mode de réalisation de l'invention,
- La figure 12 est une coupe schématique d'un échangeur thermique illustrant un troisième mode de réalisation de l'invention, et
- La figure 13 est une coupe schématique d'un échangeur thermique illustrant un quatrième mode de réalisation de l'invention.

Sur la figure 2, un aéronef 20 comprend un fuselage 22, des ailes 24 qui s'étendent de part et d'autre du fuselage 22 ainsi que des ensembles propulseurs 26 reliés aux ailes 24. Chaque ensemble propulseur 26 comprend une hélice de propulsion 28 ainsi qu'un moteur à hydrogène 30 entraînant en rotation l'hélice de propulsion 28.

L'aéronef 20 comprend, pour chaque ensemble propulseur 26, un dispositif d'alimentation en hydrogène 32 présentant au moins un réservoir d'hydrogène 34, par exemple positionné dans le fuselage 22, une pompe 36 pour mettre en pression l'hydrogène, un échangeur thermique 38 configuré pour réchauffer l'hydrogène ainsi que des conduits d'hydrogène 40 pour acheminer l'hydrogène du réservoir d'hydrogène 34 jusqu'au moteur à hydrogène 30 en traversant la pompe 36 et l'échangeur thermique 38. Le réservoir d'hydrogène 34 peut être commun à plusieurs ensembles propulseurs 26.

Selon une configuration représentée sur la figure 2, l'échangeur thermique 38 est positionné à proximité du moteur à hydrogène 30 et il est configuré pour réchauffer l'hydrogène afin d'obtenir un passage de l'état liquide à l'état gazeux pour l'hydrogène. Selon cette configuration, la distribution de l'hydrogène du réservoir d'hydrogène 34 au moteur à hydrogène 30 est réalisée avec l'hydrogène à l'état liquide.

La pompe 36 est une pompe à haute pression.

Selon une configuration non représentée, la pompe 36 est positionnée en sortie du réservoir d'hydrogène 34 et les conduits d'hydrogène 40 sont des tuyaux ou des conduits à double peau. Selon une autre configuration représentée sur la figure 2, la pompe 36 est positionnée à proximité de l'échangeur thermique 38, c'est-à-dire au plus près du moteur à hydrogène 30. Les conduits d'hydrogène 40 sont des tuyaux ou des conduits à double peau. Une pompe additionnelle 37 peut être agencée en sortie du réservoir d'hydrogène 34, pour acheminer l'hydrogène jusqu'à la pompe 36.

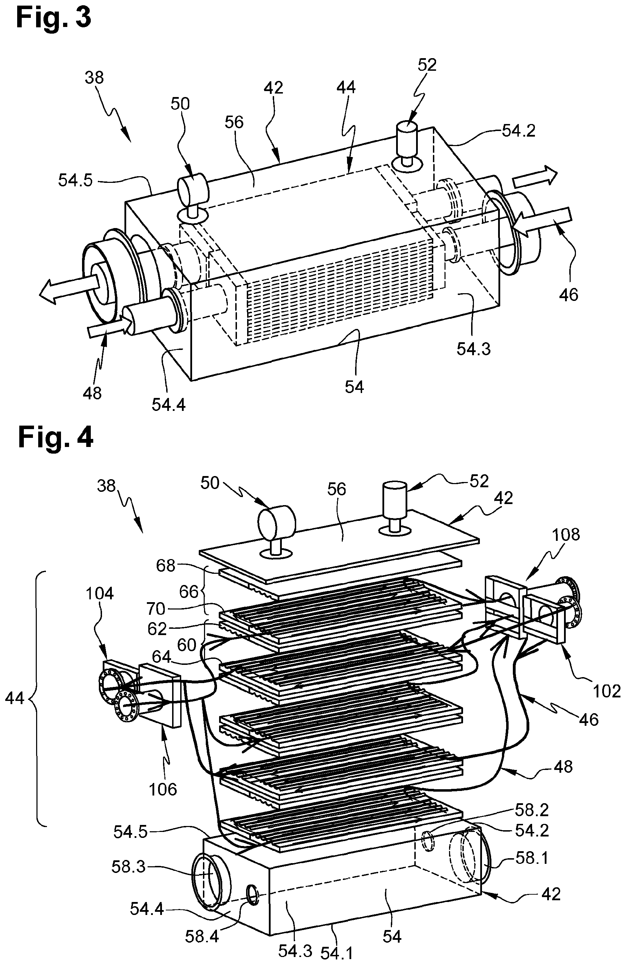

Selon un mode de réalisation visible sur les figures 3, 4, 10 à 13, un échangeur thermique 38 est un échangeur thermique à plaques qui comprend un boîtier 42 étanche ainsi qu'un corps 44 positionné à l'intérieur du boîtier 42 et configuré pour assurer un transfert thermique entre des premier et deuxième fluides 46, 48.

Selon une application, le premier fluide 46 est de l'hydrogène et le deuxième fluide 48 est un fluide caloporteur configuré pour réchauffer l'hydrogène.

Selon un mode de réalisation, le boîtier 42 est rigide et délimite une cavité dans laquelle est positionné le corps 44 de l'échangeur thermique 38. Le boîtier 42 contient une atmosphère inertée, sans oxygène, comme un gaz inerte par exemple, pour éviter toute ignition de feu ou détonation. Le boîtier 42 peut également être mis sous vide.

Selon une configuration visible sur les figures 3, 4 et 7, le boîtier 42 comprend au moins un piquage 52 pour permettre d'extraire l'oxygène initialement présent dans le boîtier 42 et pour y injecter un gaz inerte. Le piquage 52 peut également permettre de mettre le boîtier 42 sous vide. Le boîtier 42 comprend également au moins un capteur 50 configuré pour détecter une présence d'hydrogène dans le boîtier 42. Selon une configuration, le boîtier 42 comprend également au moins un capteur configuré pour détecter une présence d'oxygène dans le boîtier 42. Selon une configuration, le boîtier 42 comprend également au moins un capteur 50 configuré pour détecter une présence d'oxygène et une présence d'hydrogène dans le boîtier 42.

Selon un mode de réalisation, le boîtier 42 est approximativement parallélépipédique et comprend un bac 54 qui présente un fond 54.1 et quatre parois latérales 54.2 à 54.5 ainsi qu'un couvercle 56 relié aux parois latérales 54.2 à 54.5 de manière étanche grâce à un joint périphérique et des éléments de liaison par exemple.

Le boîtier 42 peut être métallique ou réalisé en matériau composite.

Comme illustré sur la figure 4, le boîtier 42 comprend quatre orifices 58.1 à 58.4 qui traversent au moins une paroi latérale 54.2, 54.4, plus particulièrement deux parois 54.2, 54.4 opposées. Bien entendu, l'invention n'est pas limitée à cette forme ou à cette conception pour le boîtier 42.

Le corps 44 de l'échangeur thermique 38 comprend au moins un premier assemblage 60 de première et deuxième plaques 62, 64 plaquées l'une contre l'autre entre lesquelles circule le premier fluide 46 ainsi qu'au moins un deuxième assemblage 66 de troisième et quatrième plaques 68, 70 plaquées l'une contre l'autre entre lesquelles circule le deuxième fluide 48, les premier et deuxième assemblages 60, 66 étant agencés de manière à assurer un transfert thermique entre les premier et deuxième fluides 46, 48. Les première et deuxième plaques 62, 64 d'un premier assemblage 60 sont distinctes des troisième et quatrième plaques 68, 70 d'un deuxième assemblage 66.

Selon une configuration visible sur les figures 3 à 6, le corps 44 comprend plusieurs premiers assemblages 60 et plusieurs deuxièmes assemblages 66 positionnés de manière alternée. Ainsi, deux premiers assemblages 60 sont séparés par un deuxième assemblage 66 et deux deuxièmes assemblages 66 sont séparés par un premier assemblage 60.

Les plaques 62, 64, 68, 70 sont en un matériau thermiquement conducteur.

Sur le plan géométrique, les plaques 62, 64, 68, 70 présentent des pourtours identiques. Selon une configuration, toutes les plaques 62, 64, 68, 70 sont rectangulaires et présentent chacune des premier et deuxième longs côtés 72.1, 72.2 parallèles entre eux ainsi que des premier et deuxième petits côtés 74.1, 74.2 parallèles entre eux.

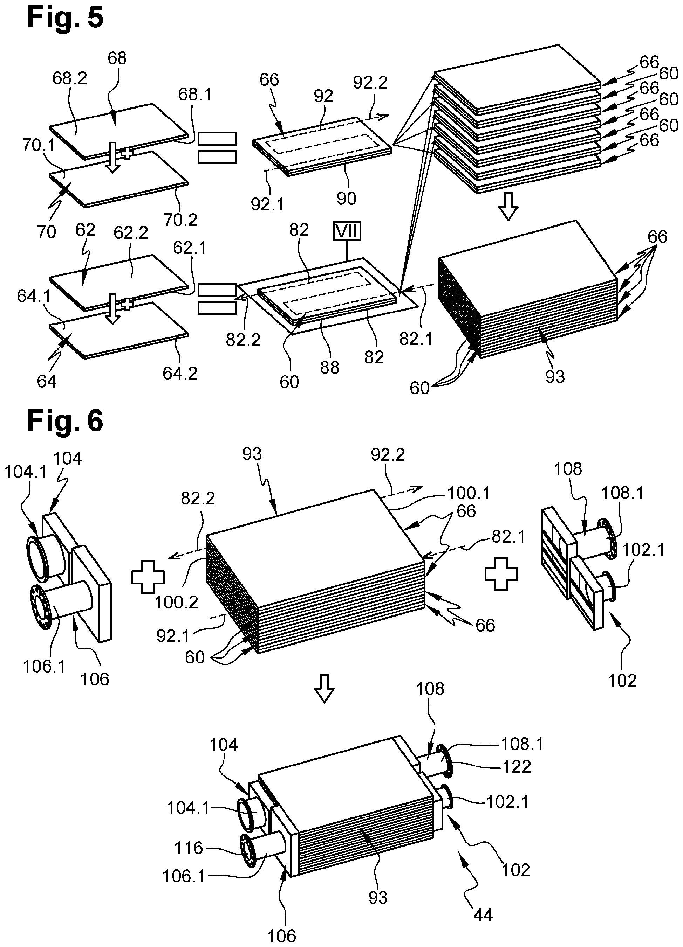

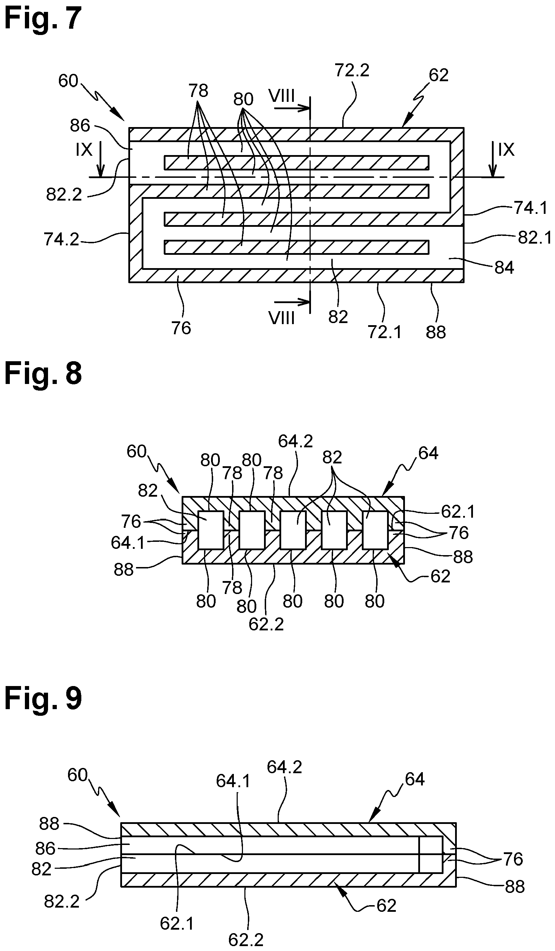

Comme illustré sur la figure 5, pour chaque premier assemblage 60, la première plaque 62 comprend une face intérieure 62.1 orientée vers la deuxième plaque 64 et une face extérieure 62.2 opposée à la face intérieure 62.1. En parallèle, la deuxième plaque 64 comprend une face intérieure 64.1 orientée vers la première plaque 62 et une face extérieure 64.2 opposée à la face intérieure 64.1. Comme illustré sur la figure 7, au moins l'une des plaques parmi les première et deuxième plaques 62, 64 comprend au niveau de sa face intérieure 62.1, un rebord périphérique 76 qui s'étend sur quasiment toute la périphérie de la première ou deuxième plaque 62, 64 ainsi qu'au moins une nervure 78 délimitant avec le rebord périphérique 72 au moins une gorge 80.

Selon une configuration, seule la première plaque 62 comprend un rebord périphérique 76 et au moins une nervure 78. Ainsi, lorsque les faces intérieures 62.1, 64.1 des première et deuxième plaques 62, 64 sont plaquées l'une contre l'autre, le bord périphérique 72 et la (ou les) nervure(s) 74 sont en contact avec la deuxième plaque 64 et la (ou les) gorge(s) 80 forme(nt) au moins un premier canal 82 configuré pour canaliser le premier fluide 46.

Selon une autre configuration, chaque première ou deuxième plaque 62, 64 comprend un rebord périphérique 76 ainsi qu'au moins une nervure 78 qui sont agencés de manière à ce que lorsque les faces intérieures 62.1, 64.1 des première et deuxième plaques 62, 64 sont plaquées l'une contre l'autre, le rebord périphérique 76 et la (ou les) nervure(s) 78 de la première plaque 62 soient en contact avec le rebord périphérique et la (ou les) nervure(s) de la deuxième plaque 64 et délimitent au moins un premier canal 82 configuré pour canaliser le premier fluide 46.

Pour au moins une plaque parmi les première et deuxième plaques 62, 64, le rebord périphérique 76 comprend au moins une première découpe 84 et au moins une deuxième découpe 86, distante de la première découpe 84, configurées pourfaire communiquer le canal 82 avec l'extérieur du premier assemblage 60.

Les première et deuxième découpes 84, 86 sont positionnées sur des côtés opposés de la première ou deuxième plaque 62, 64. Elles sont décalées l'une par rapport à l'autre selon le sens de la largeur de la première ou deuxième plaque 62, 64. Selon une configuration, la première découpe 84 est positionnée sur le premier petit côté 74.1, au niveau de la moitié du premier petit 74.1 côté proche du premier grand côté 72.1 et la deuxième découpe 86 est positionnée sur le deuxième petit côté 74.2, au niveau de la moitié du deuxième petit côté 74.2 proche du deuxième grand côté 72.2.

Quel que soit le mode de réalisation, chaque premier assemblage 60 comprend des première et deuxième plaques 62, 64 plaquées l'une contre l'autre et reliées de manière étanche, au moins un premier chant périphérique 88 en périphérie des première et deuxième plaques 62, 64 (formé par les rebords périphériques 76 des première et deuxième plaques 62, 64) ainsi qu'au moins un premier canal 82 configuré pour canaliser le premier fluide 46, positionné entre les première et deuxième plaques 62, 64 et présentant une première extrémité 82.1 débouchant au niveau du premier chant périphérique 88, correspondant à la première découpe 84, et une deuxième extrémité 82.2 débouchant au niveau du premier chant périphérique 88, correspondant à la deuxième découpe 86.

Selon un agencement, le premier fluide 46 s'écoule dans le premier canal 82 de la première extrémité 82.1 vers la deuxième extrémité 82.2.

Selon un mode de réalisation, les faces extérieures 62.2, 64.2 des première et deuxième plaques 62, 64 sont plates et lisses.

Pour chaque deuxième assemblage 66, la troisième plaque 68 comprend une face intérieure 68.1 orientée vers la quatrième plaque 70 et une face extérieure 68.2 opposée à la face intérieure 68.1. En parallèle, la quatrième plaque 70 comprend une face intérieure 70.1 orientée vers la troisième plaque 68 et une face extérieure 70.2 opposée à la face intérieure 70.1. Au moins l'une des plaques parmi les troisième et quatrième plaques 68, 70 comprend au niveau de sa face intérieure, un rebord périphérique qui s'étend sur quasiment toute la périphérie de la troisième ou quatrième plaque ainsi qu'au moins une nervure délimitant avec le rebord périphérique au moins une gorge formant, lorsque les troisième et quatrième plaques 68, 70 sont assemblées, un deuxième canal 92 configuré pour canaliser le deuxième fluide 48.

Quel que soit le mode de réalisation, chaque deuxième assemblage 66 comprend des troisième et quatrième plaques 68, 70 plaquées l'une contre l'autre et reliées de manière étanche, au moins un deuxième chant périphérique 90 en périphérie des troisième et quatrième plaques 68, 70 (formé par les rebords périphériques des troisième et quatrième plaques 68, 70) ainsi qu'au moins un deuxième canal 92 configuré pour canaliser le deuxième fluide 48, positionné entre les troisième et quatrième plaques 68, 70 et présentant une première extrémité 92.1 débouchant au niveau du deuxième chant périphérique 90 et une deuxième extrémité 92.2 débouchant au niveau du deuxième chant périphérique 90.

Selon un agencement, le deuxième fluide 48 s'écoule dans le deuxième canal 92 de la première extrémité 92.1 vers la deuxième extrémité 92.2.

Selon un mode de réalisation, les faces extérieures 68.2, 70.2 des troisième et quatrième plaques 68, 70 sont plates et lisses.

Comme illustré sur la figure 5, les premières et deuxièmes plaques 62, 64 sont assemblées deux à deux de manière à obtenir des premiers assemblages 60. Pour chaque assemblage 60, les première et deuxième plaques 62, 64 sont reliées de manière étanche en dehors du premier canal 82. En parallèle, les troisièmes et quatrièmes plaques 68, 70 sont assemblées deux à deux de manière à obtenir des deuxièmes assemblages 66. Pour chaque deuxième assemblage 66, les troisième et quatrième plaques 68, 70 sont reliées de manière étanche en dehors du deuxième canal 92.

En suivant, les premiers et deuxièmes assemblages 60, 66 sont empilés les uns au-dessus des autres de manière alternée pour obtenir un empilement 93 de premiers et deuxièmes assemblages 60, 66.

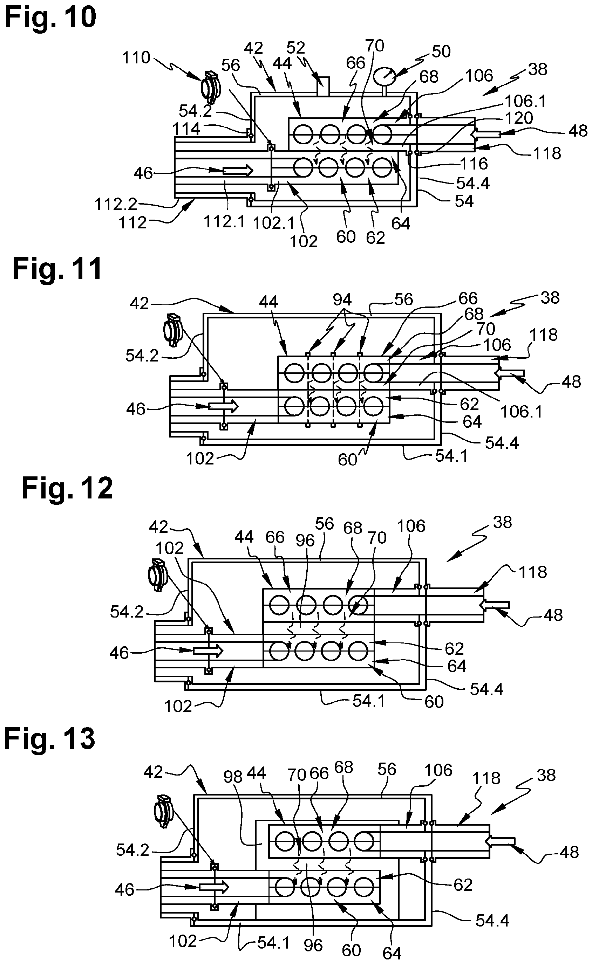

Selon des premier et deuxième modes de réalisation visibles respectivement sur les figures 10 et 11, les premiers et deuxièmes assemblages 60, 66 sont plaqués directement les uns contre les autres. Selon le premier mode de réalisation, les premiers et deuxièmes assemblages 60, 62 sont maintenus plaqués les uns contre les autres par collage ou soudage. Selon le deuxième mode de réalisation, les premiers et deuxièmes assemblages 60, 66 sont maintenus plaqués les uns contre les autres grâce à des éléments de liaison 94 qui traversent l'empilement 93 de premiers et deuxièmes assemblages 60, 66.

Selon un troisième mode de réalisation visible sur la figure 12, le corps 44 comprend au moins deux premier et deuxième assemblages 60, 66 espacés l'un de l'autre ainsi qu'au moins une couche en un matériau conducteur thermiquement 96 intercalée entre ces premier et deuxième assemblages 60, 66 espacés. Selon une configuration, tous les premiers et deuxièmes assemblages 60, 66 sont espacés les uns des autres, des couches en un matériau thermiquement conducteur 96 étant intercalées entre les premiers et deuxièmes assemblages 60, 66.

Selon un quatrième mode de réalisation visible sur la figure 13, l'échangeur thermique 38 comprend une matrice 98 en un matériau étanche aux premier et deuxième fluides 46, 48 dans laquelle est noyé le corps 44. Selon une configuration non représentée, les premiers et deuxièmes assemblages 60, 66 sont plaqués directement les uns contre les autres. Selon une autre configuration visible sur la figure 13, au moins deux premier et deuxième assemblages 60, 66 sont espacés l'un de l'autre. Selon cette autre configuration, la matrice 98 est réalisée en un matériau étanche et thermiquement conducteur et forme entre les premiers et deuxièmes assemblages 60, 66 des couches en un matériau thermiquement conducteur 96 qui assurent un transfert thermique entre les premiers et deuxièmes assemblages 60, 66. Selon les troisième et quatrième modes de réalisation, les couches en matériau thermiquement conducteur 96 assurent également la cohésion entre les premiers et deuxièmes assemblages 60, 66.

A titre d'exemple, le matériau thermiquement conducteur est une mousse métallique.

Selon un mode de réalisation, l'empilement 93 de premiers et deuxièmes assemblages 60, 66 présente des première et deuxième faces opposées 100.1, 100.2 sensiblement planes et parallèles entre elles au niveau desquelles sont réparties les premières et deuxièmes extrémités 82.1, 82.2, 92.1, 92.2 des premier et deuxième canaux 82, 92. Les premières extrémités 82.1 des premiers canaux 82 et les deuxièmes extrémités 92.2 des deuxièmes canaux 92 sont positionnées au niveau de la première face 100.1. Les deuxièmes extrémités 82.2 des premiers canaux 82 et les premières extrémités 92.1 des deuxièmes canaux 92 sont positionnées sur la deuxième face 100.2.

Selon une configuration, les premières extrémités 82.1 des premiers canaux 82 sont décalées par rapport aux deuxièmes extrémités 92.2 des deuxièmes canaux 92. Ainsi, les premières extrémités 82.1 des premiers canaux 82 sont positionnées sur une première moitié de la première face 100.1 et les deuxièmes extrémités 92.2 des deuxièmes canaux 92 sont positionnées sur une deuxième moitié de la première face 100.1.

Les deuxièmes extrémités 82.2 des premiers canaux 82 sont décalées par rapport aux premières extrémités 92.1 des deuxièmes canaux 92. Ainsi, les deuxièmes extrémités 82.2 des premiers canaux 82 sont positionnées sur une première moitié de la deuxième face 100.2 et les premières extrémités 92.1 des deuxièmes canaux 92 sont positionnées sur une deuxième moitié de la deuxième face 100.2.

Selon un mode de réalisation visible notamment sur la figure 6, le corps 44 comprend :
- une première nourrice 102 présentant un premier conduit 102.1 et configurée pour faire communiquer ledit premier conduit 102.1 avec les premières extrémités 82.1 des premiers canaux 82 des premiers assemblages 60,
- un premier collecteur 104 présentant un deuxième conduit 104.1 et configuré pour faire communiquer ledit deuxième conduit 104.1 avec les deuxièmes extrémités 82.2 des premiers canaux 82 des premiers assemblages 60,
- une deuxième nourrice 106 présentant un troisième conduit 106.1 et configurée pour faire communiquer ledit troisième conduit 106.1 avec les premières extrémités 92.1 des deuxièmes canaux 92 des deuxièmes assemblages 66,
- un deuxième collecteur 108 présentant un quatrième conduit 108.1 et configuré pour faire communiquer ledit quatrième conduit 108.1 avec les deuxièmes extrémités 92.2 des deuxièmes canaux 92 des deuxièmes assemblages 66.

Ainsi, la première nourrice 102 et le deuxième collecteur 108 sont positionnés contre la première face 100.1 et reliés à cette dernière de manière étanche. Le premier collecteur 104 et la deuxième nourrice 106 sont positionnés contre la deuxième face 100.2 et reliés à cette dernière de manière étanche.

Selon un mode de réalisation visible sur la figure 10, le premier conduit 102.1 est relié par un système de raccordement 110 à un conduit intérieur 112.1 d'un premier conduit à double peau 112, le premier conduit 102.1 ou le conduit intérieur 112.1 traversant le premier orifice 58.1 du boîtier 42. Le conduit extérieur 112.2 du premier conduit à double peau 112 est positionné à l'extérieur du boîtier 42 et présente une collerette 114 plaquée contre le boîtier 42 et reliée à ce dernier de manière étanche autour du premier orifice 58.1 grâce à un joint annulaire et des éléments de liaison. Ainsi, l'espace entre les conduits intérieur et extérieur 112.1, 112.2 du premier conduit à double peau 112 communique avec l'intérieur du boîtier 42 et contient un gaz inerte.

Selon un mode de réalisation, le deuxième conduit 104.1 est relié par un système de raccordement à un conduit intérieur d'un deuxième conduit à double peau. Le conduit extérieur du deuxième conduit à double peau est positionné à l'extérieur du boîtier 42 et présente une collerette plaquée contre le boîtier 42 et reliée à ce dernier de manière étanche autour du troisième orifice 58.3 grâce à un joint annulaire et des éléments de liaison. Ainsi, l'espace entre les conduits intérieur et extérieur du deuxième conduit à double peau communique avec l'intérieur du boîtier 42 et contient un gaz inerte.

Selon un mode de réalisation, le troisième conduit 106.1 présente une collerette 116 positionnée à l'intérieur du boîtier 42, plaquée contre et reliée à ce dernier de manière étanche autour du quatrième orifice 58.4 grâce à un joint annulaire et des éléments de liaison. A l'extérieur du boîtier 42, le troisième conduit 106.1 est prolongé par un conduit à simple peau 118 qui présente une collerette 120 positionnée à l'extérieur du boîtier 42, plaquée contre et reliée à ce dernier de manière étanche autour du quatrième orifice 58.4 grâce à un joint annulaire et des éléments de liaison.

Selon un mode de réalisation, le quatrième conduit 108.1 présente une collerette 122 positionnée à l'intérieur du boîtier 42, plaquée contre et reliée à ce dernier de manière étanche autour du deuxième orifice 58.2 grâce à un joint annulaire et des éléments de liaison. A l'extérieur du boîtier 42, le quatrième conduit 108.1 est prolongé par un conduit à simple peau qui présente une collerette positionnée à l'extérieur du boîtier 42, plaquée contre et reliée à ce dernier de manière étanche autour du deuxième orifice 58.2 grâce à un joint annulaire et des éléments de liaison.

Selon l'invention, les premier et deuxième fluides 46, 48 sont séparés par deux plaques ce qui permet de réduire les risques de mélange des premier et deuxième fluides. Par conséquent, si le premier fluide est de l'hydrogène, les conduits canalisant le deuxième fluide peuvent être des conduits à simple peau.

Selon un autre avantage, le corps 44 de l'échangeur thermique 38 étant positionné à l'intérieur d'un boîtier 42 étanche, les risques de fuite d'hydrogène à l'extérieur du boîtier 42 sont infimes. Le fait de noyer les premiers et deuxièmes assemblages 60, 66 dans une matrice d'un matériau permet également de réduire les risques de fuite.

La présence d'un gaz inerte dans le boîtier 42 autour du corps 44 de l'échangeur thermique 38 permet de réduire les risques d'ignition de feu ou de détonation.

De même, la mise sous vide du boîtier 42 autour du corps 44 de l'échangeur thermique 38 permet de réduire les risques d'ignition de feu ou de détonation.

Enfin, le fait d'équiper le boîtier d'un capteur 50 pour détecter la présence d'hydrogène dans le boîtier 42 permet de détecter une fuite d'hydrogène avant qu'elle ne se propage à l'extérieur du boîtier 42.

Selon une configuration, seuls les premier et deuxième fluides 46, 48 circulent dans l'échangeur thermique 38. Autrement dit, aucun fluide ne circule entre l'une des plaques 62, 64 du premier assemblage 60 et l'une des plaques 68, 70 du deuxième assemblage 66.

## Revendications

1. Echangeur thermique à plaques assurant un transfert thermique entre des premier et deuxième fluides (46, 48), comprenant un boîtier (42) étanche ainsi qu'un corps (44) positionné à l'intérieur du boîtier (42), ledit corps (44) comportant un empilement (93) d'au moins un premier assemblage (60) de première et deuxième plaques (62, 64) plaquées l'une contre l'autre entre lesquelles circule le premier fluide (46) et d'au moins un deuxième assemblage (66) de troisième et quatrième plaques (68, 70) plaquées l'une contre l'autre entre lesquelles circule le deuxième fluide (48), les premier et deuxième assemblages (60, 66) étant agencés de manière à assurer un transfert thermique entre les premier et deuxième fluides (46, 48), **caractérisé en ce que** le premier fluide (46), lors de l'utilisation de l'échangeur, est de l'hydrogène, **en ce que** le boîtier (42) contient une atmosphère inertée ou est mis sous vide et **en ce que** le boîtier (42) comprend au moins un capteur (50) configuré pour détecter une présence d'hydrogène dans le boîtier (42).

2. Echangeur thermique selon la revendication 1, **caractérisé en ce que** chaque premier assemblage (60) comprend au moins un premier chant périphérique (88) en périphérie des première et deuxième plaques (62, 64) ainsi qu'au moins un premier canal (82) configuré pour canaliser le premier fluide (46), positionné entre les première et deuxième plaques (62, 64) et présentant une première extrémité (82.1) débouchant au niveau du premier chant périphérique (88) et une deuxième extrémité (82.2) débouchant au niveau du premier chant périphérique (88) et **en ce que** chaque deuxième assemblage (66) comprend au moins un deuxième chant périphérique (90) en périphérie des troisième et quatrième plaques (68, 70) ainsi qu'au moins un deuxième canal (92) configuré pour canaliser le deuxième fluide (48), positionné entre les troisième et quatrième plaques (68, 70) et présentant une première extrémité (92.1) débouchant au niveau du deuxième chant périphérique (90) et une deuxième extrémité (92.2) débouchant au niveau du deuxième chant périphérique (90).

3. Echangeur thermique selon la revendication précédente, **caractérisé en ce que** le corps (44) comprend un empilement (93) de plusieurs premiers assemblages (60) et de plusieurs deuxièmes assemblages (66), les premiers et deuxièmes assemblages (60, 66) étant alternés, ledit empilement (93) comportant des première et deuxième faces (101.1, 100.2) au niveau desquelles sont réparties les premières et deuxièmes extrémités (82.1, 82.2, 92.1, 92.2) des premier et deuxième canaux (82, 92).

4. Echangeur thermique selon la revendication précédente, **caractérisé en ce que** les premières extrémités (82.1) des premiers canaux (82) des premiers assemblages (60) sont positionnées sur une première moitié de la première face (100.1) et les deuxièmes extrémités (92.2) des deuxièmes canaux (92) des deuxièmes assemblages (66) sont positionnées sur une deuxième moitié de la première face (100.1) et **en ce que** les deuxièmes extrémités (82.2) des premiers canaux (82) des premiers assemblages (60) sont positionnées sur une première moitié de la deuxième face (100.2) et les premières extrémités (92.1) des deuxièmes canaux (92) des deuxièmes assemblages (66) sont positionnées sur une deuxième moitié de la deuxième face (100.2).

5. Echangeur thermique selon la revendication précédente, **caractérisé en ce que** le corps (44) comprend :
- une première nourrice (102) présentant un premier conduit (102.1) et configurée pour faire communiquer ledit premier conduit (102.1) avec les premières extrémités (82.1) des premiers canaux (82) des premiers assemblages (60),
- un premier collecteur (104) présentant un deuxième conduit (104.1) et configuré pour faire communiquer ledit deuxième conduit (104.1) avec les deuxièmes extrémités (82.2) des premiers canaux (82) des premiers assemblages (60),
- une deuxième nourrice (106) présentant un troisième conduit (106.1) et configurée pour faire communiquer ledit troisième conduit (106.1) avec les premières extrémités (92.1) des deuxièmes canaux (92) des deuxièmes assemblages (66),
- un deuxième collecteur (108) présentant un quatrième conduit (108.1) et configuré pour faire communiquer ledit quatrième conduit (108.1) avec les deuxièmes extrémités (92.2) des deuxièmes canaux (92) des deuxièmes assemblages (66).

6. Echangeur thermique selon la revendication précédente, **caractérisé en ce que** l'échangeur thermique (38) comprend au moins un conduit à double peau (112) comportant des conduits intérieur (112.1) et extérieur (112.2) ainsi qu'au moins un système de raccordement (110) reliant le conduit intérieur (112.1) du conduit à double peau (112) et un conduit parmi le premier conduit (102.1) de la première nourrice (102) et le deuxième conduit (104.1) du premier collecteur (104), le conduit extérieur (112.2) du conduit à double peau (112) étant positionné à l'extérieur du boîtier (42) et présentant une collerette (114) plaquée contre le boîtier (42) et reliée à ce dernier de manière étanche autour d'un orifice (58.1, 58.3) du boîtier (42) traversé par le conduit intérieur (112.1) du conduit à double peau (102) ou le conduit parmi le premier conduit (102.1) de la première nourrice (102) et le deuxième conduit (104.1) du premier collecteur (104).

7. Echangeur thermique selon la revendication 5 ou 6, **caractérisé en ce qu'**au moins un conduit parmi le troisième conduit (106.1) de la deuxième nourrice (106) et le quatrième conduit (108.1) du deuxième collecteur (108) présente une collerette (116) positionnée à l'intérieur du boîtier (42), plaquée contre et reliée à ce dernier de manière étanche autour d'un orifice (58.2, 58.4) traversant le boîtier (42).

8. Echangeur thermique selon l'une des revendications précédentes, **caractérisé en ce que** l'échangeur thermique (38) comprend une matrice (98) en un matériau étanche dans laquelle est noyé le corps (44).

9. Echangeur thermique selon l'une des revendications précédentes, **caractérisé en ce que** les premier(s) et deuxième(s) assemblages (60, 66) sont plaqués directement les uns contre les autres.

10. Echangeur thermique selon l'une des revendications 1 à 8, **caractérisé en ce qu'**au moins deux premier et deuxième assemblages (60, 66) sont espacés l'un de l'autre et **en ce que** le corps (44) comprend au moins une couche en matériau thermiquement conducteur (96), intercalée entre les premier et deuxième assemblages (60, 60) espacés, assurant un transfert thermique entre eux.

11. Echangeur thermique selon l'une des revendications précédentes, **caractérisé en ce que** le boîtier (42) comprend au moins un capteur configuré pour détecter une présence d'oxygène dans le boîtier (42).

12. Aéronef comprenant au moins un échangeur thermique selon l'une des revendications précédentes.

## Patentansprüche

1. Plattenwärmetauscher, der eine Wärmeübertragung zwischen einem ersten und einem zweiten Fluid (46, 48) gewährleistet, mit einem dichten Gehäuse (42) und einem Körper (44), der innerhalb des Gehäuses (42) angeordnet ist, wobei der Körper (44) einen Stapel (93) aus wenigstens einer ersten Anordnung (60) einer ersten und einer zweiten Platte (62, 64), die aneinander gesetzt sind und zwischen denen das erste Fluid (46) fließt, und aus wenigstens einer zweiten Anordnung (66) einer dritten und einer vierten Platte (68, 70), die aneinander gesetzt sind und zwischen denen das zweite Fluid (48) fließt, aufweist, wobei die erste und die zweite Anordnung (60, 66) so angeordnet sind, dass sie eine Wärmeübertragung zwischen dem ersten und dem zweiten Fluid (46, 48) gewährleisten, **dadurch gekennzeichnet, dass** bei der Verwendung des Wärmetauschers das erste Fluid (46) Wasserstoff ist, dass das Gehäuse (42) eine inerte Atmosphäre enthält oder vakuumiert ist und dass das Gehäuse (42) wenigstens einen Sensor (50) umfasst, der so eingerichtet ist, dass er das Vorhandensein von Wasserstoff in dem Gehäuse (42) erfasst.

2. Wärmetauscher nach Anspruch 1, **dadurch gekennzeichnet, dass** die erste Anordnung (60) jeweils wenigstens eine erste Umfangskante (88) am Umfang der ersten und zweiten Platte (62, 64) sowie wenigstens einen ersten Kanal (82) umfasst, der so eingerichtet ist, dass er das erste Fluid (46) kanalisiert, zwischen der ersten und zweiten Platte (62, 64) angeordnet ist und ein erstes Ende (82.1) aufweist, das im Bereich der ersten Umfangskante (88) mündet, sowie ein zweites Ende (82.2) aufweist, das im Bereich der ersten Umfangskante (88) mündet, und dass jede zweite Anordnung (66) wenigstens eine zweite Umfangskante (90) am Umfang der dritten und vierten Platte (68, 70) sowie wenigstens einen zweiten Kanal (92) umfasst, der so eingerichtet ist, dass er das zweite Fluid (48) kanalisiert, und der zwischen der dritten und vierten Platte (68, 70) angeordnet ist und ein erstes Ende (92.1) aufweist, das Im Bereich der zweiten Umfangskante (90) mündet, und ein zweites Ende (92.2) aufweist, das im Bereich der zweiten Umfangskante (90) mündet.

3. Wärmetauscher nach dem vorhergehenden Anspruch, **dadurch gekennzeichnet, dass** der Körper (44) einen Stapel (93) aus mehreren ersten Anordnungen (60) und mehreren zweiten Anordnungen (66) umfasst, wobei die ersten und zweiten Anordnungen (60, 66) abwechselnd angeordnet sind, wobei der Stapel (93) eine erste und eine zweite Fläche (101.1, 100.2) aufweist, über die die ersten und zweiten Enden (82.1, 82.2, 92.1, 92.2) des ersten und zweiten Kanals (82, 92) verteilt sind.

4. Wärmetauscher nach dem vorhergehenden Anspruch, **dadurch gekennzeichnet, dass** die ersten Enden (82.1) der ersten Kanäle (82) der ersten Anordnungen (60) auf einer ersten Hälfte der ersten Seite (100.1) angeordnet sind und die zweiten Enden (92.2) der zweiten Kanäle (92) der zweiten Anordnungen (66) auf einer zweiten Hälfte der ersten Seite (100.1) angeordnet sind und dadurch, dass die zweiten Enden (82.2) der ersten Kanäle (82) der ersten Anordnungen (60) auf einer ersten Hälfte der zweiten Seite (100.2) angeordnet sind und die ersten Enden (92.1) der zweiten Kanäle (92) der zweiten Anordnungen (66) auf einer zweiten Hälfte der zweiten Seite (100.2) angeordnet sind.

5. Wärmetauscher nach dem vorhergehenden Anspruch, **dadurch gekennzeichnet, dass** der Körper (44) umfasst:
- einen ersten Zulauf (102), der eine erste Leitung (102.1) aufweist und so eingerichtet ist, dass er die erste Leitung (102.1) mit den ersten Enden (82.1) der ersten Kanäle (82) der ersten Anordnungen (60) in Verbindung bringt,
- einen ersten Sammler (104), der eine zweite Leitung (104.1) aufweist und so eingerichtet ist, dass er die zweite Leitung (104.1) mit den zweiten Enden (82.2) der ersten Kanäle (82) der ersten Anordnungen (60) in Verbindung bringt,
- einen zweiten Zulauf (106), der einen dritten Kanal (106.1) aufweist und so eingerichtet ist, dass er den dritten Kanal (106.1) mit den ersten Enden (92.1) der zweiten Kanäle (92) der zweiten Anordnungen (66) in Verbindung bringt,
- einen zweiten Sammler (108), der eine vierte Leitung (108.1) aufweist und so eingerichtet ist, dass er die vierte Leitung (108.1) mit den zweiten Enden (92.2) der zweiten Kanäle (92) der zweiten Anordnungen (66) in Verbindung bringt.

6. Wärmetauscher nach dem vorhergehenden Anspruch, **dadurch gekennzeichnet, dass** der Wärmetauscher (38) wenigstens eine doppelwandige Leitung (112) mit einer inneren Leitung (112.1) und einer äußeren Leitung (112.2) sowie wenigstens ein Verbindungssystem (110) umfasst, das die innere Leitung (112.1) der doppelwandigen Leitung (112) und eine Leitung zwischen der ersten Leitung (102.1) des ersten Zulaufs (102) und der zweiten Leitung (104.1) des ersten Sammlers (104) miteinander verbindet, wobei die äußere Leitung (112.2) der doppelwandigen Leitung (112) außerhalb des Gehäuses (42) angeordnet ist und einen Flansch (114) aufweist, der gegen das Gehäuse (42) angesetzt und mit diesem dicht um eine Öffnung (58.1, 58.3) des Gehäuses (42) herum verbunden ist, durch die die innere Leitung (112.1) der doppelwandigen Leitung (102) oder die Leitung zwischen der ersten Leitung (102.1) des ersten Zulaufs (102) und der zweiten Leitung (104.1) des ersten Sammlers (104) hindurchgeführt ist.

7. Wärmetauscher nach Anspruch 5 oder 6, **dadurch gekennzeichnet, dass** wenigstens eine Leitung zwischen der dritten Leitung (106.1) des zweiten Zulaufs (106) und der vierten Leitung (108.1) des zweiten Sammlers (108) einen Flansch (116) aufweist, der innerhalb des Gehäuses (42) angeordnet ist und gegen dieses um eine Öffnung (58.2, 58.4), die durch das Gehäuse (42) hindurchgeht, angesetzt und mit diesem dicht verbunden ist.

8. Wärmetauscher nach einem der vorhergehenden Ansprüche, **dadurch gekennzeichnet, dass** der Wärmetauscher (38) eine Matrix (98) aus einem dichten Material umfasst, in die der Körper (44) eingebettet ist.

9. Wärmetauscher nach einem der vorhergehenden Ansprüche, **dadurch gekennzeichnet, dass** die erste(n) und zweite(n) Anordnung(en) (60, 66) direkt gegeneinander gesetzt sind.

10. Wärmetauscher nach einem der Ansprüche 1 bis 8, **dadurch gekennzeichnet, dass** wenigstens zwei erste und zweite Anordnungen (60, 66) voneinander beabstandet sind und dass der Körper (44) wenigstens eine Schicht aus wärmeleitendem Material (96) umfasst, die zwischen den beabstandeten ersten und zweiten Anordnungen (60, 60) angeordnet ist und eine Wärmeübertragung zwischen diesen gewährleistet.

11. Wärmetauscher nach einem der vorhergehenden Ansprüche, **dadurch gekennzeichnet, dass** das Gehäuse (42) wenigstens einen Sensor umfasst, der so eingerichtet ist, dass er ein Vorhandensein von Sauerstoff im Gehäuse (42) erfasst.

12. Luftfahrzeug mit wenigstens einem Wärmetauscher nach einem der vorhergehenden Ansprüche.

## Claims

1. Plate heat exchanger transferring heat between first and second fluids (46, 48), comprising a sealed housing (42) and a body (44) positioned inside the housing (42), said body (44) including a stack (93) of at least a first assembly (60) of first and second plates (62, 64) pressed against each other, between which the first fluid (46) flows, and at least a second assembly (66) of third and fourth plates (68, 70) pressed against each other, between which the second fluid (48) flows, the first and second assemblies (60, 66) being arranged so that they transfer heat between the first and second fluids (46, 48), wherein the first fluid (46), when using the exchanger, is hydrogen and the housing (42) comprises at least one sensor (50) configured to detect the presence of hydrogen in the housing (42).

2. Heat exchanger as claimed in claim 1, wherein each first assembly (60) comprises at least one first peripheral rim (88) around the first and second plates (62, 64), and at least one first channel (82) configured to channel the first fluid (46), positioned between the first and second plates (62, 64) and having a first end (82.1) emerging on the first peripheral rim (88) and a second end (82.2) emerging on the first peripheral rim (880, and each second assembly (66) comprises at least one second peripheral rim (90) around the third and fourth plates (68, 70), and at least one second channel (92) configured to channel the second fluid (48), positioned between the third and fourth plates (68, 70) and having a first end (92.1) emerging on the second peripheral rim (90) and a second end (92.2) emerging on the second peripheral rim (90).

3. Heat exchanger as claimed in the preceding claim, wherein the body (44) comprises a stack (93) of a plurality of first assemblies (60) and a plurality of second assemblies (66), the first and second assemblies (60, 66) being alternated, said stack (93) including first and second faces (101.1, 100.2) on which the first and second ends (82.1, 82.2, 92.1, 92.2) of the first and second channels (82, 92) are distributed.

4. Heat exchanger as claimed in the preceding claim, wherein the first ends (82.1) of the first channels (82) of the first assemblies (60) are positioned on a first half of the first face (100.1) and the second ends (92.2) of the second channels (92) of the second assemblies (66) are positioned on a second half of the first face (100.1), and the second ends (82.2) of the first channels (82) of the first assemblies (60) are positioned on a first half of the second face (100.2) and the first ends (92.1) of the second channels (92) of the second assemblies (66) are positioned on a second half of the second face (100.2).

5. Heat exchanger as claimed in the preceding claim, wherein the body (44) comprises:
- a first leader (102) having a first pipe (102.1) and configured to connect said first pipe (102.1) to the first ends (82.1) of the first channels (82) of the first assemblies (60),
- a first manifold (104) having a second pipe (104.1) and configured to connect said second pipe (104.1) to the second ends (82.2) of the first channels (82) of the first assemblies (60),
- a second leader (106) having a third pipe (106.1) and configured to connect said third pipe (106.1) to the first ends (92.1) of the second channels (92) of the second assemblies (66),
- a second manifold (108) having a fourth pipe (108.1) and configured to connect said fourth pipe (108.1) to the second ends (92.2) of the second channels (92) of the second assemblies (66).

6. Heat exchanger as claimed in the preceding claim, wherein the heat exchanger (38) comprises at least one double-skinned pipe (112) including inner (112.1) and outer (112.2) pipes, and a connection system (110) connecting the inner pipe (112.1) of the double-skinned pipe (112) and one of the first pipe (102.1) of the first leader (102) and the second pipe (104.1) of the first manifold (104), the outer pipe (112.2) of the double-skinned pipe (112) being positioned outside the housing (42) and having a collar (114) pressed against the housing (42) and sealably connected thereto around an orifice (58.1, 58.3) of the housing (42) through which the inner pipe (112.1) of the double-skinned pipe (102) or the one of the first pipe (102.1) of the first leader (102) and the second pipe (104.1) of the first manifold (104) passes.

7. Heat exchanger as claimed in claim 5 or 6, wherein at least one of the third pipe (106.1) of the second leader (106) and the fourth pipe (108.1) of the second manifold (108) has a collar (116) positioned inside the housing (42), pressed against and sealably connected thereto around an orifice (58.2, 58.4) passing through the housing (42).

8. Heat exchanger as claimed in one of the preceding claims, wherein the heat exchanger (38) comprises a matrix (98) made from an impermeable material in which the body is embedded (44).

9. Heat exchanger as claimed in one of the preceding claims, wherein the first and second assemblies (60, 66) are pressed directly against each other.

10. Heat exchanger as claimed in one of claims 1 to 8, wherein at least two first and second assemblies (60, 66) are spaced apart from each other and the body (44) comprises at least one layer of thermally conductive material (96), interposed between the spaced apart first and second assemblies (60, 66), transferring heat between them.

11. Heat exchanger as claimed in one of the preceding claims, wherein the housing (42) comprises at least one sensor configured to detect the presence of oxygen in the housing (42).

12. Aircraft comprising at least one heat exchanger as claimed in one of the preceding claims.
